# EUROPÄISCHE PATENTANMELDUNG

(11) **EP 2 012 103 A1**
(43) Veröffentlichungstag der Anmeldung: **07.01.2009**
(21) Anmeldenummer: 07111866.5
(22) Anmeldetag: 05.07.2007
(51) Int. Cl.: G01K 1/08

(54) **Explosionsgeschütztes Oberflächenthermometer**

(71) Anmelder: WIKA Alexander Wiegand GmbH & Co.KG, 63911 Klingenberg/Main (DE)
(72) Erfinder: Bräutigam, Jürgen, 63820, Elsenfeld (DE); Haun, Carsten, 63868, Groß Wallstadt (DE); Lucht, Jürgen, 63927, Bürgstadt (DE)
(74) Vertreter: TBK-Patent

(57) **Zusammenfassung**

Ein explosionsgeschütztes Oberflächenthermometer hat eine elektrische Anschlusseinheit 61 in einer Kapselung 4 und eine federnd gegen eine Messstelle 5 vorgespannte Temperatursonde 11. Die Temperatursonde 11 ist in einer zur Kapselung 4 offenen Bohrung 22 beweglich geführt. Das Durchmesserspiel, zwischen der Temperatursonde 11 und der Bohrung 22, d.h. der Unterschied zwischen dem Außendurchmesser der Temperatursonde 11 und dem Innendurchmesser der Bohrung 22 bildet über die Länge der Bohrung 22 einen zünddurchlagsicheren Spalt 3. Vorzugsweise genügt das Oberflächenthermometer den Anforderungen der DIN/EN 60079-1; in einer Ausführung ist ein Spalt von höchstens 0,2 mm auf eine bevorzugte Länge von 44 mm vorgeschlagen.

## Beschreibung

Die Erfindung bezieht sich auf ein explosionsgeschütztes Oberflächenthermometer, das zur Messung einer Oberflächentemperatur eine Temperatursonde hat, die die Oberfläche berührt, deren Temperatur zu messen ist.

### Stand der Technik

Es sind explosionsgeschützte Thermometer mit einem Temperaturmessabschnitt, d.h. einer Temperatursonde bekannt, die mit einer Explosionsschutzkapselung des Thermometers fest und dicht verbunden ist. Der Einbau solcher Messgeräte als ortsfest eingebautes Messgerät zur Erfassung einer Oberflächentemperatur durch Berühren mit einer Temperatursonde ist jedoch schwierig, da eine Aufnahme für das Thermometer bereitgestellt werden muss, die eine entsprechende Nachführung der Temperatursonde gestattet, um stets eine Berührung mit der Messstelle, vorzugsweise mit annähernd konstanter Andruckkraft sicherzustellen. Solche Konstruktionen um ein in sich explosionsgeschütztes Thermometer herum sind kompliziert und haben freiliegende, bewegliche Teile, die leicht verschmutzen oder verschleißen können. Folglich können solche Thermometerkonstruktionen nur mit erheblichem Wartungsaufwand einen sicheren und zuverlässigen Betrieb gewährleisten.

Es ist ferner ein Oberflächenthermometer bekannt, dessen Messelement trotz Vibrationen der zu vermessenden Oberfläche mit der Oberfläche in Kontakt gehalten werden soll. Dazu ist das Messelement in einem Rohr aufgenommen, das an seinem einen Ende eine Platte zur Anlage an der zu vermessenden Oberfläche hat. Eine Federhülse trägt und führt an ihrer Außenseite eine Spiralfeder. Die Spiralfeder erstreckt sich zwischen der Platte und einem Gehäuse des Messgeräts und erlaubt eine gefederte Bewegung des Messelements relativ zu dem Gehäuse, wobei die Platte zur flächigen Anlage an die Messstelle durch die Spiralfeder geführt ist.

### Zusammenfassung der Erfindung

Der Erfindung liegt die Aufgabe zugrunde, ein explosionsgeschütztes Oberflächenthermometer bereitzustellen, das einfach aufgebaut ist und eine zuverlässige Erfassung der Oberflächentemperatur bereitstellt.

Diese Aufgabe wird mit einem Oberflächenthermometer mit den Merkmalen des Anspruchs 1 gelöst.

Erfindungsgemäß weist ein explosionsgeschütztes Oberflächenthermometer eine elektrische Anschlusseinheit in einer Kapselung und eine federnd gegen eine Messstelle vorgespannte Temperatursonde auf, die mit der elektrischen Anschlusseinheit verbunden ist. Die Temperatursonde ist in einer zur Kapselung offenen Bohrung beweglich geführt. Ein Spalt zwischen der Temperatursonde und der Bohrung, d.h. das Durchmesserspiel zwischen der Temperatursonde und der Bohrungsinnenwand bildet über die Bohrungslänge einen zünddurchlagsicheren Spalt aus.

Die Kapselung umgibt die elektrische Anschlusseinheit und dichtet diese zum Schutz vor Explosionen gegen die Umgebung ab. Andererseits stellt die Beweglichkeit der Temperatursonde sicher, dass die Sonde stets in dem gewünschten Anlagekontakt mit der zu vermessenden Oberfläche ist. Erfindungsgemäß werden diese widerstreitenden technischen Anforderungen dadurch gelöst, dass auf eine hermetische Abdichtung zwischen Kapselung und Temperatursonde bewusst verzichtet wird und die zulässige Spaltweite in einer zur Kapselung offenen Bohrung gezielt beschränkt wird.

Dies bedeutet, dass auch eine explosive Gasatmosphäre in die Kapselung eindringen bzw. entstehen kann; sollte dort aber eine Zündung dieser explosiven Atmosphäre stattfinden, ist ein Durchschlag der Flamme in die das Oberflächenthermometer umgebende Gasatmosphäre verhindert. Durch den Verzicht auf eine Dichtung werden im Betrieb möglicherweise auftretende Probleme, wie Verschleiß der Dichtung, Kleben/Losbrechen der Dichtung thermische/chemische Zerstörung von Dichtungsmaterialien oder Undichtigkeiten von vorne herein ausgeschlossen. Je nach Bauart können sämtliche bewegliche Teile, mit Ausnahme der um ihren Federweg freistehenden Sondenspitze, im durch den Spalt von der Umgebung getrennten Bereich angeordnet sein. Durch den vorgeschalteten Spalt ist eine Verschmutzung der beweglichen Teile schon weitgehend vermieden. Somit ist die freie Beweglichkeit der Sondenspitze relativ zu der Kapselung, die fest in der Nähe des Messorts befestigt werden kann, dauerhaft gewährleistet.

Die Maße des Durchmesserspiels über die von der Temperatursonde abgedeckte Bohrungslänge entsprechen dabei vorzugsweise den normierten Explosionsschutz-Anforderungen der DIN/EN 60079-1. Über die Anpassung von Durchmesserspiel und/oder Bohrungslänge kann aber auch eine Anpassung an andere ggf. auch strengere Normen erreicht werden.

In einer vorteilhaften Ausgestaltung der Erfindung beträgt die Spaltweite maximal 0,2mm über eine Spaltlänge von mindestens 40mm. In einer ebenfalls bevorzugten Ausführungsform beträgt die Spaltlänge 44mm bei einer maximalen Spaltweite von 0,2mm.

Die elektrische Anschlusseinheit des erfindungsgemäßen Oberflächenthermometers kann zur Datenumwandlung und Datenübertragung mit einem Transmitter in der Kapselung verbunden sein, um Messdaten von einer Messstelle aufzunehmen, ggf. umzuwandeln und zu einer datenverarbeitenden Einrichtung zu übertragen, wie z.B. einem Computer oder einem digitalen Anzeigeelement. Eine Messstelle kann zum Beispiel ein Oberflächenabschnitt an einem Behälter oder einem fluidführenden Bauteil, wie z.B. einem Schlauch oder einem Rohr sein. Auch die Messung und Überwachung anderer Oberflächen, wie z.B. Ofenwänden oder Gehäusen von Maschinen, Motoren, Transformatoren etc. ist möglich.

Die Temperatursonde ist vorzugsweise ein stabförmiges, hohles, an mindestens einer Seite dicht und thermisch leitfähig verschlossenes Bauteil, in dem ein Thermoelement oder ein Messwiderstand untergebracht und vorzugsweise in engem thermischem Kontakt mit der geschlossenen Spitze angeordnet ist. Als Messwiderstand eignet sich beispielsweise ein Pt100-Sensor, der mit geeigneten Innenleitern aus Kupfer oder Nickel mit der Anschlusseinheit verbunden ist. Alternativ können beispielsweise Thermopaare der Typen T, J, E, K oder N eingesetzt werden, die über passende Innenleiter mit der Anschlusseinheit verbunden sind. Zur Isolation der Innenleiter wird vorzugsweise verdichtetes Magnesiumoxidpulver oder Aluminiumoxidpulver eingesetzt. Auf diese Weise können solche Temperatursonden auch hohen Umgebungstemperaturen widerstehen.

Die federnde Vorspannung der Temperatursonde kann durch ein Federelement erreicht werden, das an einem Ende gegen die Kapselung des Oberflächenthermometers anliegt und an seinem anderen Ende mit der Temperatursonde direkt oder indirekt in Verbindung steht, also z.B. mit einem Vorsprung der Temperatursonde verbunden ist oder nur anliegt. Die Feder wirkt dabei entweder als eine Zug- oder eine Druckfeder, die Bewegungen der Temperatursonde hauptsächlich in ihrer axialen Richtung mit einer Zug- bzw. Druckkraft entgegenwirkt.

Das Befestigen des Oberflächenthermometers an einem Messort erfolgt so, dass das Federelement die Temperatursonde gegen die eigentliche Messstelle vorspannt. Dadurch können Bewegungen der Messstelle ausgeglichen werden, ohne dass das Messelement an der Spitze der Temperatursonde den Kontakt zu der Messstelle verliert. Derartige Bewegungen können beispielsweise bei einem elastischen Messobjekt, wie zum Beispiel einem fluidführenden Schlauch durch Druckschwankungen der Fluidströmung in dem Schlauch auftreten. Es können aber auch Vibrationen, Druckstöße oder dergleichen die Bewegungsursache der Oberfläche von Rohren Behältern oder dergleichen sein.

Üblicherweise besteht die Kapselung des Oberflächenthermometers aus einem nichtleitenden Material, es wäre aber ebenso denkbar, dass die Kapselung des Oberflächenthermometers wie die Temperatursonde aus Metall bestehen, beispielsweise aus einem Edelstahl. Eine elektrische Verbindung zwischen der Temperatursonde und der metallischen Kapselung des Oberflächenthermometers kann zum Beispiel über ein metallisches Federelement erfolgen und damit beispielsweise eine Erdung des Oberflächenthermometers realisiert werden.

Alternativ kann die elektrische Verbindung zwischen dem Federelement und der Temperatursonde über eine zusätzliche leitende Komponente, wie z.B. ein Kabel hergestellt sein.

Wenn eine elektrische Verbindung zwischen der Kapselung und dem Messelement nicht erwünscht ist, kann das Federelement aus einem Faserverbundwerkstoff oder aus einem Elastomer hergestellt sein. Alternativ können auch keramische oder gläserne Isolierelemente zwischen die Kapselung und die Temperatursonde geschaltet sein, um diese galvanisch voneinander zu trennen.

Weitere Aufgaben, Vorteile und Gesichtspunkte ergeben sich aus den abhängigen Ansprüchen, der Beschreibung des Ausführungsbeispiels und den angefügten Zeichnungen.

### Kurzbeschreibung der Zeichnungen

Die Erfindung wird nachfolgend anhand eines bevorzugten Ausführungsbeispiels unter Bezugnahme auf die Zeichnung näher erläutert. Darin zeigt
Fig. 1 eine schematische Schnittansicht (Längsschnitt) des Ausführungsbeispiels des Oberflächenthermometers gemäß der Erfindung; und
Fig. 2 ist eine Schnittansicht entlang der Linie A-A in Fig. 1.

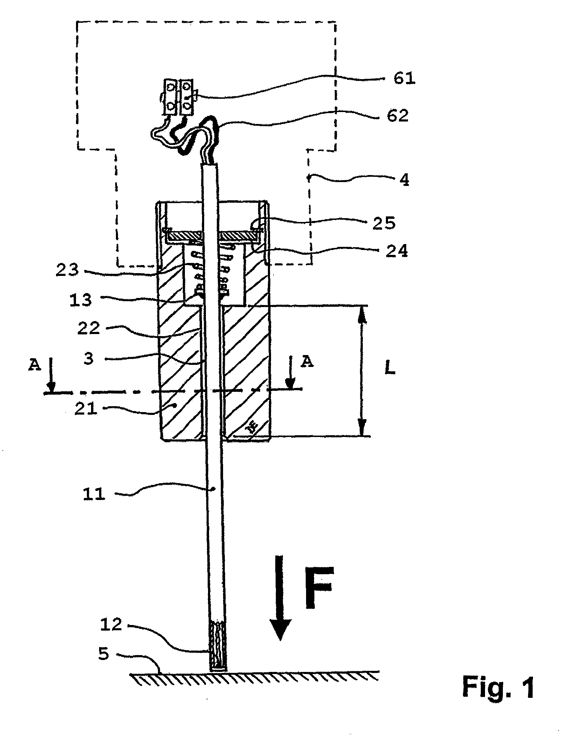

Das in Fig. 1 dargestellte Ausführungsbeispiel der Erfindung zeigt ein Oberflächenthermometer mit einer Temperatursonde 11. Die Sonde 11 weist an ihrer Spitze ein Messelement 12, üblicherweise einen PT100-Sensor auf, der die Temperatur der Messstelle 5, d.h. der Oberfläche des zu messenden Objekts misst, indem ein temperaturabhängiger Widerstand des Messelements 12, das von einem Messstrom durchflossen wird, eine Spannung des Messstroms verändert. Der Messstrom wird über die Kabel 62 zum Messelement 12 und zurück geleitet und die Spannungsänderung kann über einen Anschluss 61 von einem weiteren Bauteil, z.B. einem Transmitter aufgenommen und umgewandelt bzw. weiter übertragen werden. Wie Fig. 1 zu entnehmen ist, befinden sich der Anschluss 61 und die Kabel 62 in der Kapselung 4 des Oberflächenthermometers. Der Transmitter befindet sich vorzugsweise ebenfalls in der Kapselung 4.

Die Temperatursonde 11, die in der gezeigten Form aus einer materialisolierten Mantelleitung (Außenhülle: korrosionsfestes Material, z.B. Edelstahl, Ni-Legierungen, hitzefeste NiCr(Fe) Legierungen oder dergleichen; Innenleiter: Thermopaare oder Widerstand; Isolierung: verdichtetes Aluminiumoxid- oder Magnesiumoxidpulver)besteht, ist in einer Bohrung 22 eines Führungsbauteils 21 beweglich geführt. Der ringförmige Spalt 3, der zwischen der Bohrungsinnenwand und der Außenoberfläche der Temperatursonde 11 entsteht, weist bei einer Mindestlänge L von 40mm eine maximale Spaltweite von 0,2mm auf. Vorzugsweise hat der Spalt eine Spaltlänge L von 44mm bei einer maximalen Spaltweite von 0,2mm.

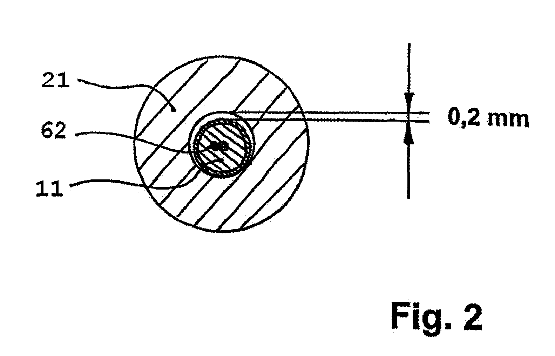

Wenn die Temperatursonde 11 in der Bohrung 22 seitlich derart versetzt wird, dass die Außenwand der Sonde 11 die Innenwand der Bohrung 22 auf einer Seite berührt, entspricht die Breite des Spalts, der gegenüber der Berührungsstelle entsteht, maximal 0,2mm, wie in Fig. 2 zu sehen ist.

Mit diesen Maßen erfüllt der Spalt 3 die Anforderungen der DIN/EN 60079-1 und erreicht den Status eines zünddurchschlagsicheren Spalts.

An dem unteren Ende der Bohrung 22 ist eine Senkung vorgesehen, die zur sicheren Handhabung des Oberflächenthermometers dient. Da diese Senkung radial nach außen größer wird, kann die Senkung nicht mehr zu dem zünddurchschlagsicheren Spalt 3 dazu gerechnet werden, wie in Fig. 1 anhand der Markierung der Spaltlänge L angezeigt ist.

Um die axiale Nachgiebigkeit der Temperatursonde 11 bei einer möglichen Aufpresskraft F auf die Messstelle zu erhalten, ist die Sonde 11 über ein Federelement 23 gegen einen Deckel 24 vorgespannt. Das Federelement 23 ist üblicherweise eine Spiralfeder aus Metall, kann aber ebenso ein Federelement einer anderen Bauform, z.B. eine Tellerfeder, sein oder kann aus einem anderen Material, z.B. einem Elastomer bestehen.

An einem oberen Ende wird das Federelement 23 in einer ersten Aussparung in dem Führungsbauteil 21 von dem Deckel 24 gehalten. Der Deckel 24 ist an einer Oberfläche durch ein Ringelement 25, z.B. einen Sprengring fixiert, der in eine Nut in der ersten Aussparung eingesetzt ist. An der gegenüberliegenden Oberfläche liegt der Deckel 24 an einem Stufenabschnitt des Führungsbauteils 21 an, der sich zwischen der ersten Aussparung und einer zweiten Aussparung des Führungsbauteils 21 befindet, wobei der Durchmesser der zweiten Aussparung kleiner als der der ersten Aussparung ist.

In dieser zweiten Aussparung stützt sich das Federelement 23 mit seinem unteren Ende an einem Flansch 13 an der Temperatursonde 11 ab, der an der Sonde 11 mittels einer Fügetechnik, z.B. Punktschweißen befestigt ist. Es ist ebenso denkbar, dass sich das Federelement 23 an einem Stufenabschnitt in der Temperatursonde abstützt.

Durch diese Anordnung ist die Temperatursonde 11 gegenüber dem Führungsbauteil 21 mit dem Federelement 23 als Druckfeder federnd vorgespannt und erreicht damit sowohl eine axiale Nachgiebigkeit, abhängig von dem Federweg des Federelements 23, als auch eine gewisse radiale Nachgiebigkeit, abhängig von dem maximalen Umfangsspiel der Temperatursonde 11 in der Bohrung 22.

Es wäre auch eine Anordnung denkbar, bei der das Federelement 23 die Temperatursonde 11 gegenüber dem Führungsbauteil 21 als Zugfeder vorspannt. Dabei ist das Federelement 23 an einem unteren Ende an dem Führungsbauteil 21 befestigt, z.B. durch eine Fügetechnik wie etwa Punktschweißen, während das obere Ende mit der Temperatursonde 11 verbunden ist, beispielsweise durch Einhängen der Zugfeder in Bohrungen an einen Flansch 13 an der Sonde 11. Ein möglicher Vorteil dieser Gestaltung wäre ein größerer erreichbarer Federweg des Federelements 23, da keine axiale Begrenzung durch einen Deckel 24 oder dergleichen vorliegt.

Das Führungsbauteil 21 weist an seinem oberen Ende ein Außengewinde auf, über das eine Kapselung 4 mit dem Führungsbauteil 21 fluiddicht zu einer Einheit verbunden ist. Die Kapselung 4 ist zu den beiden Aussparungen in dem Führungsbauteil 21 hin offen. Der Anschluss 61 und die daran befestigten oberen Enden der Kabel 62 befinden sich in der Kapselung 4. Das Innere der Kapselung 4 und die Aussparungen des Führungsbauteils 21 bilden zusammen einen Kapselinnenraum des Oberflächenthermometers, der nur durch den zünddurchschlagsicheren Spalt nach außen offen ist. Ein möglicher Funkenschlag , z.B. an dem Anschluss 61 oder eine Flamme können daher nicht nach Außen übertragen werden und evtl. ein brennbares Medium außerhalb des Oberflächenthermometers entzünden.

Die Erfindung ist nicht auf das vorstehende ausführliche Ausführungsbeispiel beschränkt. Sie kann in dem Umfang der nachfolgenden Ansprüche modifiziert werden.

Insbesondere sind Anpassungen der Kapselung an den Einsatzzweck durch z.B. Sichtfenster, lösbare Deckel etc. solche Modifikationen.

## Patentansprüche

1. Explosionsgeschütztes Oberflächenthermometer mit:
einer elektrischen Anschlusseinheit (61) in einer Kapselung (4), und
einer federnd gegen eine Messstelle (5) vorgespannten Temperatursonde (11), die in einer zur Kapselung (4) offenen Bohrung (22) beweglich geführt ist,
wobei das Durchmesserspiel zwischen der Temperatursonde (11) und der Innenwand der Bohrung (22) über die Länge der Bohrung (22) einen zünddurchlagsicheren Spalt (3) bildet.

2. Oberflächenthermometer nach Anspruch 1, wobei das Oberflächenthermometer den Anforderungen der DIN/EN 60079-1 entspricht.

3. Oberflächenthermometer nach Anspruch 2, wobei der Spalt (3) eine Spaltweite von maximal 0,2mm über eine Länge von mindestens 44mm aufweist.

4. Oberflächenthermometer nach einem der vorhergehenden Ansprüche, wobei die elektrische Anschlusseinheit (61) mit einem Transmitter verbunden ist.

5. Oberflächenthermometer nach einem der vorhergehenden Ansprüche, wobei die Kapselung (4) aus einem Metall, wie zum Beispiel Edelstahl, besteht.

6. Oberflächenthermometer nach einem der vorhergehenden Ansprüche, wobei ein Federelement (23), das die Temperatursonde (11) gegen die Kapselung (4) des Oberflächenthermometers vorspannt, als eine Druckfeder wirkt.

7. Oberflächenthermometer nach einem der Ansprüche 1 bis 5, wobei das Federelement (23), das die Temperatursonde (11) gegen die Kapselung (4) des Oberflächenthermometers vorspannt, als eine Zugfeder wirkt.

8. Oberflächenthermometer nach einem der vorhergehenden Ansprüche, wobei das Federelement (23) aus einem Metall, wie zum Beispiel Federstahl, aus einem Faserverbundwerkstoff oder aus einem Elastomer hergestellt ist.

9. Oberflächenthermometer nach einem der vorhergehenden Ansprüche, wobei die Temperatursonde (11) einen PT100-Sensor (12) hat.

10. Oberflächenthermometer nach einem der vorhergehenden Ansprüche, wobei die Temperatursonde (11) aus Metall besteht und/oder eine leitende Komponente von einer Messoberfläche der Sonde (11) zu dem Federelement (23) aufweist, so dass die Messoberfläche über das Federelement (23) mit der Kapselung (4) elektrisch leitend verbunden ist.

## Geänderte Patentansprüche

### Geänderte Patentansprüche gemäss Regel 137(2) EPÜ.

**1.** Explosionsgeschütztes Oberflächenthermometer mit:
einer elektrischen Anschlusseinheit (61) in einer Kapselung (4),
einer von einer Feder (23) gegen eine Messstelle (5) vorgespannten Temperatursonde (11), die in einer zur Kapselung (4) offenen Bohrung (22) beweglich geführt ist,
wobei die Feder (23) zwischen einem mit der Kapselung verbundenen Deckel (24) und einem mit der Temperatursonde (11) verbundenen Flansch (13) angeordnet ist, und
wobei das Durchmesserspiel zwischen der Temperatursonde (11) und der Innenwand der Bohrung (22) über die Länge der Bohrung (22) einen zünddurchlagsicheren Spalt (3) bildet, der den Anforderungen der DIN/EN 60079-1 entspricht.

**2.** Oberflächenthermometer nach Anspruch 1, wobei der Spalt (3) eine Spaltweite von maximal 0,2mm über eine Länge von mindestens 44mm aufweist.

**3.** Oberflächenthermometer nach einem der vorhergehenden Ansprüche, wobei die elektrische Anschlusseinheit (61) mit einem Transmitter verbunden ist.

**4.** Oberflächenthermometer nach einem der vorhergehenden Ansprüche, wobei die Kapselung (4) aus einem Metall, wie zum Beispiel Edelstahl, besteht.

**5.** Oberflächenthermometer nach einem der vorhergehenden Ansprüche, wobei ein Federelement (23), das die Temperatursonde (11) gegen die Kapselung (4) des Oberflächenthermometers vorspannt, als eine Druckfeder wirkt.

**6.** Oberflächenthermometer nach einem der Ansprüche 1 bis 4, wobei das Federelement (23), das die Temperatursonde (11) gegen die Kapselung (4) des Oberflächenthermometers vorspannt, als eine Zugfeder wirkt.

**7.** Oberflächenthermometer nach einem der vorhergehenden Ansprüche, wobei das Federelement (23) aus einem Metall, wie zum Beispiel Federstahl, aus einem Faserverbundwerkstoff oder aus einem Elastomer hergestellt ist.

**8.** Oberflächenthermometer nach einem der vorhergehenden Ansprüche, wobei die Temperatursonde (11) einen PT100-Sensor (12) hat.

**9.** Oberflächenthermometer nach einem der vorhergehenden Ansprüche, wobei die Temperatursonde (11) aus Metall besteht und/oder eine leitende Komponente von einer Messoberfläche der Sonde (11) zu dem Federelement (23) aufweist, so dass die Messoberfläche über das Federelement (23) mit der Kapselung (4) elektrisch leitend verbunden ist.
